# EUROPÄISCHE PATENTANMELDUNG

(11) **EP 4 825 542 A1**
(43) Veröffentlichungstag der Anmeldung: **21.10.2026**
(21) Anmeldenummer: 26172497.5
(22) Anmeldetag: 15.04.2026
(51) Int. Cl.: B25J 9/16, G05B 13/02

(54) **VERFAHREN UND SYSTEM ZUM PARAMETRIEREN EINES REGLERS FÜR EINEN ROBOTERPROZESS**

(30) Priorität: 17.04.2025 DE 102025115297
(71) Anmelder: KUKA Deutschland GmbH, 86165 Augsburg (DE)
(72) Erfinder: Haas, Bernhard, 86165 Augsburg (DE); Pecher, Franz, 86165 Augsburg (DE); Baum, Sascha, 86165 Augsburg (DE); Monreal, Karsten, 86165 Augsburg (DE)
(74) Vertreter: Dorow, Florian

(57) **Zusammenfassung**

Ein Verfahren zum Parametrieren eines Reglers (11) für einen Roboterprozess weist die Schritte auf: Bereitstellen eines ersten Zeitverlaufs einer ersten Zustandsvariable des Roboterprozesses für einen ersten Wert eines ersten Reglerparameters eines Reglers für den Roboterprozess; Bereitstellen wenigstens eines weiteren Zeitverlaufs der ersten Zustandsvariable für einen anderen Wert des ersten Reglerparameters; Ermitteln von Gütewerten für diese bereitgestellten Zeitverläufe mithilfe einer wenigstens teilweise auf maschinellem Lernen basierenden Datenverarbeitung (20); und Optimieren (S50) des Wertes des ersten Reglerparameters mithilfe eines Optimierers (30) auf Basis der Werte des ersten Reglerparameters und der Gütewerte, welche für die Zeitverläufe für diese Werte des ersten Reglerparameters ermittelt worden sind. Die Erfindung betrifft außerdem ein System bzw. Computerprogramm(produkt).

## Beschreibung

Die vorliegende Erfindung betrifft insbesondere ein Verfahren und System zum Parametrieren eines Reglers für einen Roboterprozess sowie ein Computerprogramm bzw. Computerprogrammprodukt zur Durchführung des Verfahrens.

Regler für Roboterprozesse werden bisher in der Praxis in der Regel manuell parametriert, was aufwändig und wenig reproduzierbar ist und erfahrenes Fachpersonal erfordert.

Aufgabe der vorliegenden Erfindung ist es, das Parametrieren eines Reglers für einen Roboterprozess und/oder das Durchführen des Roboterprozesses zu verbessern.

Diese Aufgabe wird durch ein Verfahren mit den Merkmalen des Anspruchs 1 bzw. 9 gelöst. Ansprüche 10, 11 stellen ein System bzw. Computerprogramm bzw. Computerprogrammprodukt zur Durchführung eines hier beschriebenen Verfahrens unter Schutz. Die Unteransprüche betreffen vorteilhafte Weiterbildungen.

Nach einer Ausführung der vorliegenden Erfindung weist ein Verfahren zum Parametrieren bzw. Vorgeben von Parametern eines Reglers ("Reglerparameter") für einen Roboterprozess die Schritte auf:
- Bereitstellen eines ersten Zeitverlaufs einer ersten Zustandsvariable des Roboterprozesses für einen ersten Wert eines ersten Reglerparameters eines Reglers für den Roboterprozess;
- Bereitstellen eines weiteren Zeitverlaufs, vorzugsweise mehrerer weiteren Zeitverläufe, der ersten Zustandsvariable für (jeweils) einen anderen Wert des ersten Reglerparameters;
- für einen oder mehrere dieser bereitgestellten Zeitverläufe jeweils Ermitteln eines Gütewertes mithilfe einer, vorzugsweise derselben, wenigstens teilweise auf maschinellem Lernen basierenden Datenverarbeitung; und
- Optimieren des Wertes des ersten Reglerparameters mithilfe eines Optimierers auf Basis der Werte des ersten Reglerparameters und der Gütewerte, welche für die Zeitverläufe für diese Werte des ersten Reglerparameters ermittelt worden sind, wobei vorzugsweise dem Optimierer die Werte des ersten Reglerparameters und jeweils der zugehörige bzw. -ordnete Gütewert, welcher für den Zeitverlauf für den jeweiligen Wert des ersten Reglerparameters ermittelt worden ist, zur Verfügung gestellt werden.

Dem liegt die Idee zugrunde, einem Optimierer, der in einer Ausführung ein an sich bekannter und/oder numerischer Optimierer, in einer Ausführung ein gradientenbasierter Optimierer, eine evolutorischer Optimierer, ein wenigstens teilweise auf maschinellem Lernen basierender Optimierer oder dergleichen sein kann, Gütekriteriumswerte für unterschiedliche Werte eines Reglerparameters zur Verfügung zu stellen, die mithilfe künstlicher Intelligenz ermittelt werden bzw. worden sind.

Dadurch, insbesondere ein separates Ermitteln von Gütekriteriumswerten mithilfe einer wenigstens teilweise auf maschinellem Lernen basierenden Datenverarbeitung, die hierauf trainiert wird bzw. worden ist, kann das Parametrieren des Reglers verbessert werden, insbesondere schnell(er), mit geringe(re)m Aufwand, zuverlässig(er), konsistenter und/oder ohne erfahrenes Fachpersonal durchgeführt werden und/oder bessere Reglerparameter ermittelt werden.

In einer Ausführung sind die vorstehend genannten, zum Optimieren des Wertes des ersten Reglerparameters bereitgestellten Zeitverläufe Zeitverläufe der ersten Zustandsvariable des Roboterprozesses für (jeweils) den gleichen Wert eines zweiten Reglerparameters des Reglers und (die) verschiedene(n) Werte des ersten Reglerparameters und das Verfahren weist die weiteren Schritte auf:
- Bereitstellen eines zweiten Zeitverlaufs einer zweiten oder besonders bevorzugt der ersten Zustandsvariable des Roboterprozesses für den optimierten Wert des ersten Reglerparameters und einen ersten Wert des zweiten Reglerparameters des Reglers;
- Bereitstellen eines weiteren Zeitverlaufs, vorzugsweise mehrerer weiteren Zeitverläufe, dieser ersten bzw. zweiten Zustandsvariable für (jeweils) einen anderen Wert des zweiten Reglerparameters und den optimierten Wert des ersten Reglerparameters;
- für einen oder mehrere dieser bereitgestellten Zeitverläufe jeweils Ermitteln eines Gütewertes mithilfe einer, vorzugsweise derselben, wenigstens teilweise auf maschinellem Lernen basierenden Datenverarbeitung, besonders bevorzugt der(selben) Datenverarbeitung, mithilfe der bereits der Wert des ersten Reglerparameters optimiert worden bzw. hierfür die Gütewerte für die verschiedenen Werte des ersten Reglerparameters ermittelt worden sind; und
- Optimieren des zweiten Reglerparameters mithilfe eines Optimierers, besonders bevorzugt des(selben) Optimierers, mithilfe dessen bereits der Wert des ersten Reglerparameters optimiert worden ist, auf Basis der Werte des zweiten Reglerparameters und der Gütewerte, welche für die Zeitverläufe für diese Werte des zweiten Reglerparameters ermittelt worden sind, wobei vorzugsweise dem Optimierer die Werte des zweiten Reglerparameters und jeweils der zugehörige bzw. -ordnete Gütewert, welcher für den Zeitverlauf für den jeweiligen Wert des zweiten Reglerparameters ermittelt worden ist, zur Verfügung gestellt werden.

Dem liegt die Idee zugrunde, zweistufig zunächst den ersten Reglerparameter, sozusagen bei konstantem zweiten Reglerparameter, zu optimieren und danach den zweiten Reglerparameter bei konstantem, bereits optimiertem ersten Reglerparameter, zu optimieren. In einer Weiterbildung sind der erste und zweite Reglerparameter Reglerparameter eines kaskadierten Reglers, in einer Ausführung der erste Reglerparameter ein Reglerparameter einer (bezogen auf den zweiten Reglerparameter weiter) inneren Regelschleife und der zweite Reglerparameter ein Reglerparameter einer (bezogen auf den ersten Reglerparameter weiter) äußeren Regelschleife. Mit anderen Worten wird in einer Ausführung ein kaskadierter Regler stufenweise und bevorzugt (Reglerparameter) von innen nach außen parametriert bzw. optimiert.

Dadurch kann das Parametrieren des Reglers verbessert werden, insbesondere schnell(er), mit geringe(re)m Aufwand, zuverlässig(er) und/oder ohne erfahrenes Fachpersonal durchgeführt werden und/oder bessere Reglerparameter ermittelt werden.

In einer Ausführung umfasst das Verfahren das Einstellen des Reglers auf Basis des bzw. mit dem bzw. auf den durch den Optimierer ermittelten bzw. optimierten Wert des ersten Reglerparameters und in einer Weiterbildung auf Basis des bzw. mit dem bzw. auf den durch den Optimierer ermittelten bzw. optimierten Wert des zweiten Reglerparameters.

In einer Ausführung weist die erste Zustandsvariable eine erste Zustandsgröße und eine oder mehrere weitere Zustandsgrößen des Roboterprozesses auf, wobei ein Zeitverlauf der ersten Zustandsvariable einen Zeitverlauf der ersten Zustandsgröße und einen Zeitverlauf dieser weiteren Zustandsgröße(n) aufweist.

Indem (eine Zustandsvariable mit) zwei oder mehr Zustandsgrößen verwendet wird/werden, kann das Parametrieren des Reglers verbessert werden, insbesondere schnell(er) und/oder zuverlässig(er) durchgeführt werden und/oder bessere Reglerparameter ermittelt werden.

In einer Weiterbildung sind die erste Zustandsgröße und die bzw. eine oder mehrere der weitere(n) Zustandsgröße(n jeweils) unterschiedliche physikalische Zustandsgrößen, weisen in einer Ausführung unterschiedliche physikalische Dimensionen auf.

Alternativ oder besonders bevorzugt zusätzlich weist in einer Weiterbildung die erste Zustandsgröße eine Posengröße, insbesondere eine kartesische Position und/oder Orientierung und/oder Antriebs- und/oder Gelenkstellung und/oder eine erste und/oder höhere Zeitableitung einer kartesischen Position und/oder Orientierung und/oder Antriebs- und/oder Gelenkstellung auf. In einer Ausführung dieser Weiterbildung weist die bzw. eine oder mehrere der weitere(n) Zustandsgröße(n jeweils) eine Lastgröße, insbesondere eine Kraft und/oder ein Drehmoment und/oder eine erste und/oder höhere Zeitableitung einer Kraft und/oder eines Drehmoments, auf.

In einer Weiterbildung weist die erste Zustandsgröße eine Lastgröße, insbesondere eine Kraft und/oder ein Drehmoment und/oder eine erste und/oder höhere Zeitableitung einer Kraft und/oder eines Drehmoments, auf. In einer Ausführung dieser Weiterbildung weist die bzw. eine oder mehrere der weitere(n) Zustandsgröße(n jeweils) eine Positionsgröße, insbesondere eine kartesische Position und/oder Orientierung und/oder Antriebs- und/oder Gelenkstellung und/oder eine erste und/oder höhere Zeitableitung einer kartesischen Position und/oder Orientierung und/oder Gelenkstellung auf.

Alternativ oder besonders bevorzugt zusätzlich weisen in einer Ausführung die erste und/oder wenigstens eine weitere Zustandsgröße (jeweils) eine Differenz zwischen einem Ist- und einem Sollwert auf, insbesondere also eine Differenz zwischen einem Ist- und einem Sollwert einer, vorzugsweise vorstehend genannten, Posengröße oder Lastgröße.

In einer Ausführung weist der Zeitverlauf der ersten Zustandsvariable den Zeitverlauf der ersten Zustandsgröße und darauffolgend den Zeitverlauf der wenigstens einen weiteren Zustandsgröße auf, vorzugsweise seriell nacheinander den Zeitverlauf der ersten Zustandsgröße und der wenigstens einen weiteren Zustandsgröße.

Durch eines oder besonders bevorzugt zwei oder mehr dieser Merkmale kann das Parametrieren des Reglers verbessert werden, insbesondere schnell(er) und/oder zuverlässig(er) durchgeführt werden und/oder bessere Reglerparameter ermittelt werden.

In einer Ausführung umfasst das Bereitstellen des ersten Zeitverlaufs und des wenigstens einen weiteren Zeitverlaufs der ersten Zustandsvariable für verschiedene Werte des ersten Reglerparameters ein reales oder simuliertes Durchführen des Roboterprozesses, ein Verändern des Wertes des ersten Reglerparameters während dieses Durchführens und ein Aufteilen eines während dieses Durchführens ermittelten Gesamtzeitverlaufs in den ersten und wenigstens einen weiteren Zeitverlauf. In einer Weiterbildung umfasst das Bereitstellen des zweiten Zeitverlaufs und des wenigstens einen weiteren Zeitverlaufs für verschiedene Werte des zweiten Reglerparameters und jeweils den optimierten Wert des ersten Reglerparameters ein reales oder simuliertes Durchführen des Roboterprozesses, ein Verändern des Wertes des ersten Reglerparameters während dieses Durchführens und ein Aufteilen eines während dieses Durchführens ermittelten Gesamtzeitverlaufs in den ersten und diesen wenigstens einen weiteren Zeitverlauf.

Dadurch kann das Parametrieren des Reglers verbessert werden, insbesondere schnell(er), mit geringe(re)m Aufwand, zuverlässig(er) und/oder ohne erfahrenes Fachpersonal durchgeführt werden und/oder bessere Reglerparameter ermittelt werden.

In einer Ausführung umfasst das Bereitstellen des ersten Zeitverlaufs und des wenigstens einen weiteren Zeitverlaufs der ersten Zustandsvariable für verschiedene Werte des ersten Reglerparameters ein unterschiedliches Skalieren des ersten Zeitverlaufs und des wenigstens einen weiteren Zeitverlaufs. In einer Weiterbildung umfasst das Bereitstellen des zweiten Zeitverlaufs und des wenigstens einen weiteren Zeitverlaufs für verschiedene Werte des zweiten Reglerparameters und jeweils den optimierten Wert des ersten Reglerparameters ein unterschiedliches Skalieren des zweiten Zeitverlaufs und dieses wenigstens einen weiteren Zeitverlaufs.

Durch eines oder besonders bevorzugt zwei oder mehr dieser Merkmale kann das Parametrieren des Reglers verbessert werden, insbesondere schnell(er) und/oder zuverlässig(er) durchgeführt werden und/oder bessere Reglerparameter ermittelt werden.

In einer Ausführung weist die wenigstens teilweise auf maschinellem Lernen basierende Datenverarbeitung, mithilfe der die zum Optimieren des Wertes des ersten Reglerparameters verwendeten Gütewerten für Zeitverläufe der ersten Zustandsvariable für die verschiedenen Werte des ersten Reglerparameters und in einer Weiterbildung die zum Optimieren des Wertes des zweiten Reglerparameters verwendeten Gütewerten für Zeitverläufe der Zustandsvariable für die verschiedenen Werte des zweiten Reglerparameters ermittelt werden, ein künstliches neuronales Netz und/oder einen Entscheidungsbaum-Algorithmus ("decision tree algorithm") und/oder einen Zufallswald-Algorithmus ("random forrest algorithm") auf und/oder ist, in einer Weiterbildung wird, auf Basis einer manuellen Labelung von Zeitverläufen der ersten Zustandsvariable trainiert. Mit anderen Worten kann ein erfindungsgemäßes Verfahren zum Parametrieren eines Reglers für einen Roboterprozess eine bereits entsprechend trainierte wenigstens teilweise auf maschinellem Lernen basierende Datenverarbeitung verwenden und in einer Weiterbildung das Trainieren auf Basis einer manuellen Labelung von Zeitverläufen (wenigstens) der ersten Zustandsvariable selbst (mit) umfassen. Ein manuelles Labeln kann insbesondere ein Bewerten unterschiedlicher Zeitverläufe durch einen menschlichen Operator umfassen, der, vorteilhafterweise empirisch, den Zeitverläufen, in einer Ausführung auf Basis bzw. unter Berücksichtigung des realen oder simulierten Durchführens des Roboterprozesses, unterschiedliche Gütewerte zuweist, beispielsweise Zeitverläufe, bei denen (größere) Schwingungen und/oder Regelfehler und/oder Prozessabweichungen und/oder - störungen aufgetreten sind, schlecht(er) bewertet oder dergleichen.

Durch eines oder besonders bevorzugt zwei oder mehr dieser Merkmale kann das Parametrieren des Reglers verbessert werden, insbesondere schnell(er) und/oder zuverlässig(er) durchgeführt werden und/oder bessere Reglerparameter ermittelt werden.

In einer Ausführung ist der Roboterprozess ein Roboterprozess mit wenigstens einem Roboterarm und/oder wenigstens einem robotergeführten, vorzugsweise roboterarmgeführten, Werkzeug, insbesondere einer robotergeführten Schweißzange, und/oder der Regler ein Regler zum Steuern wenigstens eines Roboters (des Roboterprozesses), insbesondere wenigstens eines bzw. des wenigstens einen Roboterarms und/oder wenigstens eines bzw. des wenigstens einen robotergeführten Werkzeugs, vorzugsweise der wenigstens einen robotergeführten Schweißzange. In einer Weiterbildung ist der Regler ein Regler zum Steuern wenigstens eines Antriebs, insbesondere Motors, vorzugsweise Elektromotors, wenigstens eines Roboters (des Roboterprozesses), vorzugsweise wenigstens eines bzw. des wenigstens einen Roboterarms, und/oder wenigstens eines robotergeführten, insbesondere roboterarmgeführten, Werkzeugs, in einer Ausführung einer Schweißzange. Alternativ oder besonders bevorzugt zusätzlich weist in einer Ausführung der erste Reglerparameter eine Konstante eines Proportional- und/oder Integral- und/oder Differential-Reglers auf, kann insbesondere eine solche sein. In einer Weiterbildung kann auch der zweite Reglerparameter eine Konstante eines Proportional- und/oder Integral- und/oder Differential-Reglers aufweisen, insbesondere sein.

Für diese Anwendungen ist die vorliegende Erfindung aufgrund der Prozessbedingungen besonders vorteilhaft.

Nach einer Ausführung der vorliegenden Erfindung weist ein Verfahren zum Durchführen eines bzw. des Roboterprozesses mithilfe eines bzw. des Reglers die Schritte auf:
- Parametrieren des Reglers nach einem hier beschriebenen Verfahren; und
- Durchführen des Roboterprozesses mithilfe des parametrierten Reglers.

Nach einer Ausführung der vorliegenden Erfindung ist ein System zum Parametrieren eines bzw. des Reglers für einen bzw. den Roboterprozess, insbesondere hard- und/oder software-, insbesondere programmtechnisch, zur Durchführung eines hier beschriebenen Verfahrens eingerichtet und/oder weist auf:
- Mittel zum Bereitstellen eines ersten Zeitverlaufs einer ersten Zustandsvariable des Roboterprozesses für einen ersten Wert eines ersten Reglerparameters eines Reglers für den Roboterprozess;
- Mittel zum Bereitstellen wenigstens eines weiteren Zeitverlaufs der ersten Zustandsvariable für einen anderen Wert des ersten Reglerparameters;
- Mittel zum Ermitteln von Gütewerten für diese bereitgestellten Zeitverläufe mithilfe einer wenigstens teilweise auf maschinellem Lernen basierenden Datenverarbeitung, vorzugsweise die wenigstens teilweise auf maschinellem Lernen basierenden Datenverarbeitung, die in einer Ausführung diese Datenverarbeitung aufweisen; und
- Mittel zum Optimieren des Wertes des ersten Reglerparameters mithilfe eines Optimierers auf Basis der Werte des ersten Reglerparameters und der Gütewerte, welche für die Zeitverläufe für diese Werte des ersten Reglerparameters ermittelt worden sind, vorzugsweise den Optimierer.

Ein System und/oder Mittel im Sinne der vorliegenden Erfindung kann hardund/oder softwaretechnisch ausgebildet sein, insbesondere wenigstens eine, vorzugsweise mit einem Speicher- und/oder Bussystem daten- bzw. signalverbundene, insbesondere digitale, Verarbeitungs-, insbesondere Mikroprozessoreinheit (CPU), Graphikkarte (GPU) oder dergleichen, und/oder ein oder mehrere Programme oder Programmmodule, insbesondere einen oder mehrere, vorzugsweise entsprechend programmierte, Computer, aufweisen. Die Verarbeitungseinheit kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die Verarbeitungseinheit die Schritte solcher Verfahren ausführen kann und damit insbesondere den Wert des ersten Reglerparameters und in einer Weiterbildung des zweiten Reglerparameters optimieren, in einer Weiterbildung den Regler mit diesem/-n Wert(en) parametrieren und in einer Ausführung den Roboterprozess mithilfe des parametrierten Reglers durchführen kann. Ein Computerprogrammprodukt kann in einer Ausführung ein, insbesondere computerlesbares und/oder nicht-flüchtiges, Speichermedium zum Speichern eines Programms bzw. von Anweisungen bzw. mit einem darauf gespeicherten Programm bzw. mit darauf gespeicherten Anweisungen aufweisen, insbesondere sein. In einer Ausführung veranlasst ein Ausführen eines Programms bzw. seiner Anweisungen durch ein System bzw. eine Steuerung, insbesondere einen Computer oder eine Anordnung von mehreren Computern, das System bzw. die Steuerung, insbesondere den bzw. die Computer, dazu, ein hier beschriebenes Verfahren bzw. einen oder mehrere seiner Schritte auszuführen, bzw. sind das Programm bzw. die Anweisungen hierzu eingerichtet.

In einer Ausführung sind ein oder mehrere, insbesondere alle, Schritte des Verfahrens vollständig oder teilweise computerimplementiert bzw. werden ein oder mehrere, insbesondere alle, Schritte des Verfahrens vollständig oder teilweise automatisiert durchgeführt, insbesondere durch das System bzw. sein(e) Mittel.

In einer Ausführung weist das System den bzw. die Roboter, insbesondere den/das bzw. die Roboterarm(e) und/oder robotergeführte(n) Werkzeug(e), insbesondere Schweißzange(n), und/oder den Regler auf.

Weitere Vorteile, Merkmale und vorteilhafte Weiterbildungen der vorliegenden Erfindung ergeben sich aus den Unteransprüchen und den Ausführungsbeispielen. Hierzu zeigt, teilweise schematisiert:
Fig. 1:ein System zum Parametrieren eines Reglers für einen Roboterprozess zur Durchführung eines Verfahrens nach einer Ausführung der vorliegenden Erfindung; und
Fig. 2: ein Verfahren zum Parametrieren des Reglers nach einer Ausführung der vorliegenden Erfindung.

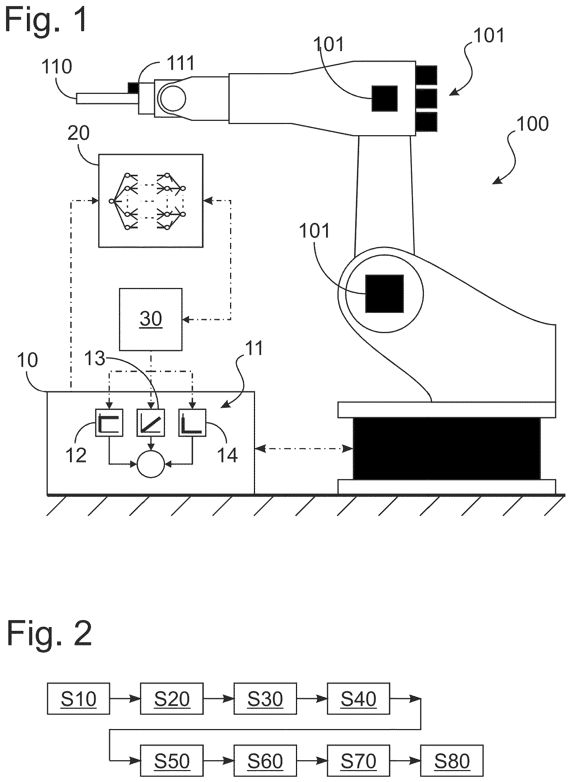

Fig. 1 zeigt ein System zum Parametrieren eines Reglers 11 einer Steuerung 10 zum Steuern eines Roboterarms 100, der ein Werkzeug, vorzugsweise eine Schweißzange 110, führt. Der Regler 11 kann insbesondere ein Regler zum Steuern eines Antriebs 101 des Roboterarms 100 oder eines Antriebs 111 des robotergeführten Werkzeugs 110 sein.

In einem Schritt S10 (vgl. Fig. 2) wird zunächst eine wenigstens teilweise auf maschinellem Lernen basierende Datenverarbeitung 20 auf Basis einer manuellen Labelung von Zeitverläufen einer ersten Zustandsvariable trainiert, die beispielsweise Positions- und Momentenschleppfehler während eines Roboterprozesses mit der Schweißzange 110 umfasst. Dabei werden verschiedene Prozesse mit variierenden Prozessbedingungen und/oder Reglerparametern durchgeführt und diesen jeweils manuell ein Gütewert zugeordnet, beispielsweise Prozesse mit größeren Schwingungen und/oder Prozessabweichungen und/oder -störungen schlecht(er) bewertet, und die Datenverarbeitung 20 derart trainiert, dass sie unterschiedlichen Zeitverläufen entsprechende Gütewerte zuweist.

In einem Schritt S20 wird der Roboterschweißprozess mehrfach für verschiedene Werte einer Proportionalkonstanten eines Proportionalanteils 12 und/oder verschiedene Werte einer Differentialkonstanten eines Differentialanteils 14 und/oder verschiedene Werte einer Integralkonstanten eines Integralanteils 13 des Reglers, der entsprechend insbesondere einen P-Regler, Pl-Regler, PD-Regler oder PID-Regler aufweisen kann, durchgeführt.

In einem Schritt S30 werden diese Daten aufbereitet, wobei jeweils ein Zeitverlauf für je einen Wert des bzw. der Reglerparameter(s) bereitgestellt wird, der aus dem Zeitverlauf des Positionsschleppfehlers für diese(n) Reglerparameterwert(e) und dem daran anschließenden bzw. angefügten Zeitverlauf des Momentenschleppfehlers für diese(n) Reglerparameterwert(e) besteht.

In einem Schritt S40 optimiert ein Optimierer 30 zunächst beispielsweise die Proportionalkonstante des Proportionalanteils 12. Hierzu erhält er für verschiedene Werte der Proportionalkonstante die entsprechenden Gütewerte, die die Datenverarbeitung 20 für den Zeitverlauf für den entsprechenden Wert der Proportionalkonstante ermittelt.

In einem Schritt S50 optimiert der Optimierer 30 nun beispielsweise analog die Differentialkonstante des Differentialanteils 14 oder die Integralkonstante des Integralanteils 13, wobei die bereits optimierte Proportionalkonstante verwendet wird. Hierzu erhält er für verschiedene Werte der Differential- bzw. Integralkonstante und die optimierte Proportionalkonstante die entsprechenden Gütewerte, die die Datenverarbeitung 20 für den Zeitverlauf für diese Reglerparameterwerte ermittelt.

Bei einem PID-Regler kann dann schließlich auch die dritte der Proportional-Differential- und Integralkonstante analog optimiert werden (Schritt S60).

Anschließend kann in einem Schritt S70 der Regler 11 mit diesen Werten parametriert und in einem Schritt S80 den Roboterprozess mit dem solcherart parametrierten Regler durchgeführt werden.

In der vorliegenden Offenbarung impliziert "weist ein X auf" allgemein keine abschließende Aufzählung, sondern ist eine Kurzform von "weist wenigstens ein X auf" und umfasst auch "weist zwei oder mehr X auf" sowie "weist außer X auch Y auf". Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: Steuerung
- 11: Regler
- 12: Proportionalanteil
- 13: Integralanteil
- 14: Differentialanteil
- 20: Datenverarbeitung
- 30: Optimierer
- 100: Roboterarm
- 101: Antrieb
- 110: Schweißzange
- 111: Antrieb

## Patentansprüche

1. Verfahren zum Parametrieren eines Reglers (11) für einen Roboterprozess, wobei das Verfahren die Schritte aufweist:
- Bereitstellen eines ersten Zeitverlaufs einer ersten Zustandsvariable des Roboterprozesses für einen ersten Wert eines ersten Reglerparameters eines Reglers (11) für den Roboterprozess;
- Bereitstellen wenigstens eines weiteren Zeitverlaufs der ersten Zustandsvariable für einen anderen Wert des ersten Reglerparameters;
- Ermitteln von Gütewerten für diese bereitgestellten Zeitverläufe mithilfe einer wenigstens teilweise auf maschinellem Lernen basierenden Datenverarbeitung (20); und
- Optimieren (S40) des Wertes des ersten Reglerparameters mithilfe eines Optimierers (30) auf Basis der Werte des ersten Reglerparameters und der Gütewerte, welche für die Zeitverläufe für diese Werte des ersten Reglerparameters ermittelt worden sind.

2. Verfahren nach Anspruch 1, **dadurch gekennzeichnet, dass** die zum Optimieren des Wertes des ersten Reglerparameters bereitgestellten Zeitverläufe der ersten Zustandsvariable des Roboterprozesses für den gleichen Wert eines zweiten Reglerparameters des Reglers und verschiedene Werte des ersten Reglerparameters sind und das Verfahren die weiteren Schritte aufweist:
- Bereitstellen eines zweiten Zeitverlaufs der ersten oder einer zweiten Zustandsvariable des Roboterprozesses für den optimierten Wert des ersten Reglerparameters und einen ersten Wert des zweiten Reglerparameters des Reglers;
- Bereitstellen wenigstens eines weiteren Zeitverlaufs dieser Zustandsvariable für den optimierten Wert des ersten Reglerparameters und einen anderen Wert des zweiten Reglerparameters;
- Ermitteln von Gütewerten für diese bereitgestellten Zeitverläufe mithilfe einer wenigstens teilweise auf maschinellem Lernen basierenden Datenverarbeitung; und
- Optimieren (S50, S60) des zweiten Reglerparameters mithilfe eines Optimierers auf Basis der Werte des zweiten Reglerparameters und der Gütewerte, welche für die Zeitverläufe für diese Werte des zweiten Reglerparameters ermittelt worden sind.

3. Verfahren nach einem der vorhergehenden Ansprüche, **dadurch gekennzeichnet, dass** die erste Zustandsvariable eine erste Zustandsgröße und wenigstens eine weitere Zustandsgröße des Roboterprozesses aufweist, wobei ein Zeitverlauf der ersten Zustandsvariable einen Zeitverlauf der ersten Zustandsgröße und einen Zeitverlauf der wenigstens einen weiteren Zustandsgröße aufweist.

4. Verfahren nach dem vorhergehenden Anspruch, **dadurch gekennzeichnet, dass** die erste Zustandsgröße und die wenigstens eine weitere Zustandsgröße unterschiedliche physikalische Zustandsgrößen sind und/oder eine von der ersten und wenigstens einen weiteren Zustandsgröße eine Posengröße oder eine Lastgröße aufweist und/oder die erste und/oder wenigstens eine weitere Zustandsgröße eine Differenz zwischen einem Ist- und einem Sollwert aufweist und/oder der Zeitverlauf der ersten Zustandsvariable den Zeitverlauf der ersten Zustandsgröße und darauffolgend den Zeitverlauf der wenigstens einen weiteren Zustandsgröße aufweist.

5. Verfahren nach einem der vorhergehenden Ansprüche, **dadurch gekennzeichnet, dass** das Bereitstellen des ersten Zeitverlaufs und des wenigstens einen weiteren Zeitverlaufs der ersten Zustandsvariable für verschiedene Werte des ersten Reglerparameters ein reales oder simuliertes Durchführen des Roboterprozesses, ein Verändern des Wertes des ersten Reglerparameters während dieses Durchführens und ein Aufteilen eines während dieses Durchführens ermittelten Gesamtzeitverlaufs in den ersten und wenigstens einen weiteren Zeitverlauf umfasst.

6. Verfahren nach einem der vorhergehenden Ansprüche, **dadurch gekennzeichnet, dass** das Bereitstellen des ersten Zeitverlaufs und des wenigstens einen weiteren Zeitverlaufs der ersten Zustandsvariable für verschiedene Werte des ersten Reglerparameters ein unterschiedliches Skalieren des ersten Zeitverlaufs und des wenigstens einen weiteren Zeitverlaufs umfasst.

7. Verfahren nach einem der vorhergehenden Ansprüche, **dadurch gekennzeichnet, dass** die wenigstens teilweise auf maschinellem Lernen basierende Datenverarbeitung, mithilfe der die zum Optimieren des Wertes des ersten Reglerparameters verwendeten Gütewerten für Zeitverläufe der ersten Zustandsvariable für die verschiedenen Werte des ersten Reglerparameters ermittelt werden, ein künstliches neuronales Netz und/oder einen Entscheidungsbaum-Algorithmus und/oder einen Zufallswald-Algorithmus aufweist und/oder auf Basis einer manuellen Labelung von Zeitverläufen der ersten Zustandsvariable trainiert ist.

8. Verfahren nach einem der vorhergehenden Ansprüche, **dadurch gekennzeichnet, dass** der Roboterprozess ein Roboterprozess mit wenigstens einem Roboterarm (100) und/oder wenigstens einem robotergeführten Werkzeug (110) und/oder der Regler ein Regler zum Steuern wenigstens eines Roboters (100) und/oder robotergeführten Werkzeugs (110) und/oder wenigstens eines Antriebs (101) eines Roboters (100) und/oder wenigstens eines Antriebs (111) eines robotergeführten Werkzeugs (110) ist und/oder der erste Reglerparameter eine Konstante eines Proportional- und/oder Integralund/oder Differential-Reglers (12, 13, 14) aufweist.

9. Verfahren zum Durchführen des Roboterprozesses mithilfe eines Reglers (11), wobei das Verfahren die Schritte aufweist:
- Parametrieren des Reglers nach einem Verfahren nach einem der vorhergehenden Ansprüche; und
- Durchführen des Roboterprozesses mithilfe des parametrierten Reglers.

10. System zum Parametrieren eines Reglers (11) für einen Roboterprozess, das zur Durchführung eines Verfahrens nach einem der vorhergehenden Ansprüche eingerichtet ist und/oder aufweist:
- Mittel zum Bereitstellen eines ersten Zeitverlaufs einer ersten Zustandsvariable des Roboterprozesses für einen ersten Wert eines ersten Reglerparameters eines Reglers für den Roboterprozess;
- Mittel zum Bereitstellen wenigstens eines weiteren Zeitverlaufs der ersten Zustandsvariable für einen anderen Wert des ersten Reglerparameters;
- Mittel zum Ermitteln von Gütewerten für diese bereitgestellten Zeitverläufe mithilfe einer wenigstens teilweise auf maschinellem Lernen basierenden Datenverarbeitung (20); und
- Mittel zum Optimieren des Wertes des ersten Reglerparameters mithilfe eines Optimierers (30) auf Basis der Werte des ersten Reglerparameters und der Gütewerte, welche für die Zeitverläufe für diese Werte des ersten Reglerparameters ermittelt worden sind.

11. Computerprogramm oder Computerprogrammprodukt, wobei das Computerprogramm oder Computerprogrammprodukt, insbesondere auf einem computerlesbaren und/oder nicht-flüchtigen Speichermedium gespeicherte, Anweisungen enthält, die bei der Ausführung durch einen oder mehrere Computer oder ein System nach Anspruch 10 den oder die Computer oder das System dazu veranlassen, ein Verfahren nach einem der Ansprüche 1 bis 9 durchzuführen.
